# FASCICULE DE BREVET EUROPEEN

(11) **EP 0 446 095 B1**
(45) Date de publication et mention de la délivrance du brevet: **25.08.1993**
(21) Numéro de dépôt: 91400492.4
(22) Date de dépôt: 22.02.1991
(51) Int. Cl.: B60R 1/08

(54) **Dispositif d'inclinaison, notamment vers le bas, d'un miroir de rétroviseur pour véhicule automobile par exemple et rétroviseur équipé d'un tel dispositif**
Vorrichtung zum Neigen, insbesondere nach unten, eines Rückblickspiegels, zum Beispiel eines Kraftfahrzeuges und Rückblickspiegel versehen mit einer solchen Vorrichtung
Device to notably tilt down a rear view mirror of a vehicle and rear view mirror equipped with such a device

(30) Priorité: 05.03.1990 FR 9002743
(43) Date de publication de la demande: 11.09.1991
(73) Titulaire: AUTOMOBILES PEUGEOT, 75116 Paris (FR); AUTOMOBILES CITROEN, 92200 Neuilly-sur-Seine (FR)
(72) Inventeur: Banc, Daniel, F-95220 Herblay (FR)
(74) Mandataire: Durand, Yves Armand Louis

(56) Documents cités:
- EP-A- 0 151 673
- DE-A- 2 036 818
- DE-A- 2 213 586
- FR-A- 2 423 374
- FR-A- 2 579 149

## Description

La présente invention se rapporte à des rétroviseurs extérieurs pour véhicule automobile, et plus particulièrement à un rétroviseur équipé d'un dispositif d'inclinaison notamment vers le bas d'un miroir tel que défini dans le préambule de la revendication 1 et comme par exemple dans le document EP-A-151 673.

On a proposé depuis longtemps des rétroviseurs extérieurs pour véhicule automobile, équipés de dispositifs de réglage de la position d'un miroir en fonction de la morphologie du conducteur, afin que celui-ci ait une visibilité optimale lors de la conduite courante du véhicule.

Cependant, ces dispositifs de réglage ne permettent pas, sans dérégler la position du miroir adaptée à la conduite courante, de faire basculer ce miroir d'une valeur angulaire prédéterminée afin d'accroître la visibilité vers le bas du véhicule lors d'une manoeuvre en marche arrière, telle que le stationnement le long d'un trottoir, par exemple, durant laquelle il convient de placer avec précision les roues du véhicule par rapport au rebord du trottoir.

C'est pourquoi on a proposé par exemple dans EP-A-151 673, un rétroviseur équipé d'un dispositif de réglage du miroir vers le bas du véhicule, ledit dispositif étant du type à réglage électrique commandé par un système à mémorisation électronique des différentes positions du miroir.

Néanmoins, ces dispositifs de l'art antérieur sont coûteux et ne peuvent pas être adaptés à des rétroviseurs conventionnels à réglage mécanique ou électrique, pas plus qu'à des rétroviseurs dont le boîtier est mobile par rapport à la carrosserie du véhicule.

Aussi, la présente invention a pour but de résoudre tous ces problèmes, en proposant un dispositif d'inclinaison notamment vers le bas d'un miroir de rétroviseur extérieur de véhicule automobile, qui n'obligerait tout d'abord pas à dérégler la position de conduite courante du miroir lorsqu'on désire obtenir le rabattement de ce miroir vers le bas, et qui de plus, fasse appel à des moyens d'inclinaison simples et par conséquent économiques, ainsi qu'aptes à être adaptés sur tout type de rétroviseur à réglage mécanique ou électrique.

A cet effet, l'invention a pour objet un dispositif d'inclinaison d'un miroir de rétroviseur extérieur pour un véhicule automobile, du type comprenant un miroir articulé sur une platine de support solidaire d'un boîtier du rétroviseur et supportant un élément mobile, cet élément qui est commandé par un moyen d'entraînement déplaçant le miroir, entre une position relevée adaptée à la conduite courante et une position inclinée apte à accroître la visibilité vers le bas lors d'une manoeuvre en marche arrière du véhicule, caractérisé en ce que ledit élément mobile coopère avec un ensemble porte-miroir pivotant, entre deux positions stables prédéterminées par des butées qui correspondent respectivement à l'une desdites positions relevée ou inclinée du miroir, les butées étant constituées par un évidement du boîtier et/ou par des protubérances de la platine de support et/ou de l'ensemble porte-miroir.

L'invention est également caractérisée en ce que la platine de support précitée comporte une partie en forme de glissière dans laquelle est monté coulissant ledit élément mobile, ce dernier étant fonctionnellement lié au moyen d'entraînement et comportant une rampe en biseau qui forme un levier s'étendant en saillie de ladite glissière et apte à s'intercaler entre la platine de support et l'ensemble porte-miroir afin de faire pivoter ce dernier.

L'invention est encore caractérisée en ce que la rampe en biseau dudit élément mobile comporte un évidement apte à s'engager dans une partie de l'ensemble porte-miroir de manière à former un crochet de verrouillage du porte-miroir dans sa position relevée.

Suivant une autre caractéristique de l'invention, les butées précitées sont constituées par des protubérances de la platine de support et/ou de l'ensemble porte-miroir.

On précisera encore ici qu'un ressort de rappel de l'ensemble porte-miroir en position relevée relie la platine de support et ledit ensemble porte-miroir.

Suivant encore une caractéristique de l'invention, le moyen d'entraînement précité est constitué par un moto-réducteur ou un électro-aimant fixé sur la platine de support.

L'invention est encore caractérisée en ce que le moyen d'entraînement est commandé par un interrupteur disposé sur le tableau de bord du véhicule.

Suivant une autre caractéristique de l'invention le moyen d'entraînement est commandé par un interrupteur d'allumage du feu de recul du véhicule.

L'invention apparaîtra mieux dans la description détaillée qui suit et se refère aux dessins annexés, donnés uniquement à titre d'exemple et dans lesquels.

La figure 1 est une vue en coupe horizontale à travers un rétroviseur extérieur de véhicule automobile équipé du dispositif suivant l'invention, avec le miroir à sa position relevée.

La figure 2 est une vue similaire à celle de la figure 1, avec le miroir à sa position inclinée.

La figure 3 est une vue en coupe verticale suivant la ligne III-III visible sur la figure 1.

La figure 4 est une vue en coupe verticale suivant la ligne IV-IV de la figure 2.

La figure 5 est une vue transversale en coupe verticale au travers d'un rétroviseur extérieur de véhicule automobile équipé d'un dispositif d'inclinaison suivant un autre mode de réalisation de l'invention.

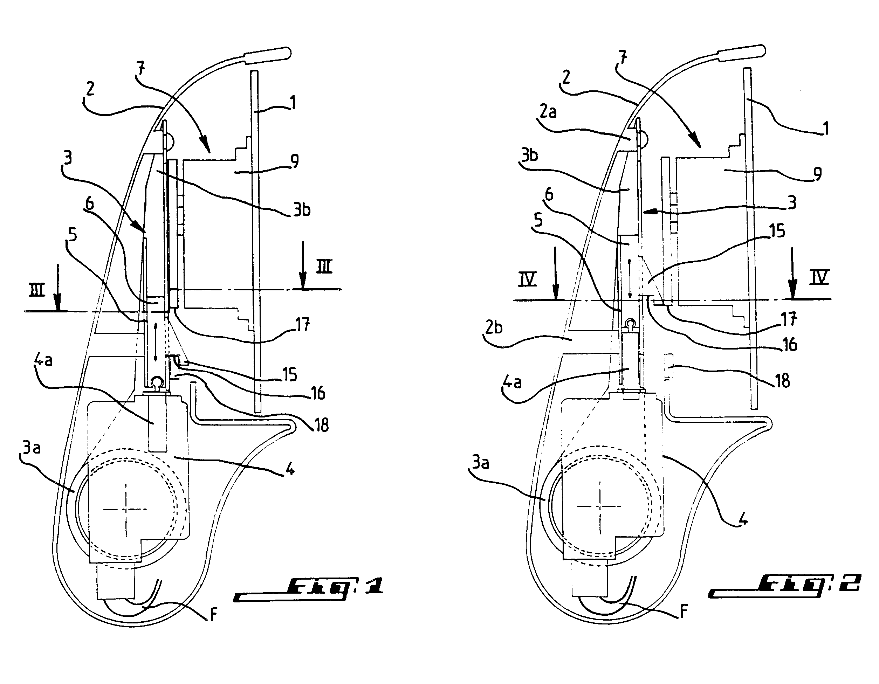

En se reportant aux figures 1 à 4, on voit que suivant un premier mode de réalisation de l'invention, le dispositif d'inclinaison d'un miroir 1 est monté à l'intérieur d'un boîtier 2, d'un rétroviseur extérieur de véhicule automobile, à l'aide de pattes de fixation 2a et 2b, intégrales audit boîtier 2 et supportant de façon fixe une platine de support 3 du dispositif.

Cette platine de support 3 s'étend longitudinalement au boîtier 2 et comporte d'une part une partie 3a de support d'un moyen d'entraînement 4, tel qu'un électro-aimant ou un moto-réducteur, et d'autre part, une portion allongée 3b, intégrale à la portion de support 3a et dans laquelle est formée une glissière de guidage 5 d'un élément mobile 6 qui sera décrit en détail ultérieurement.

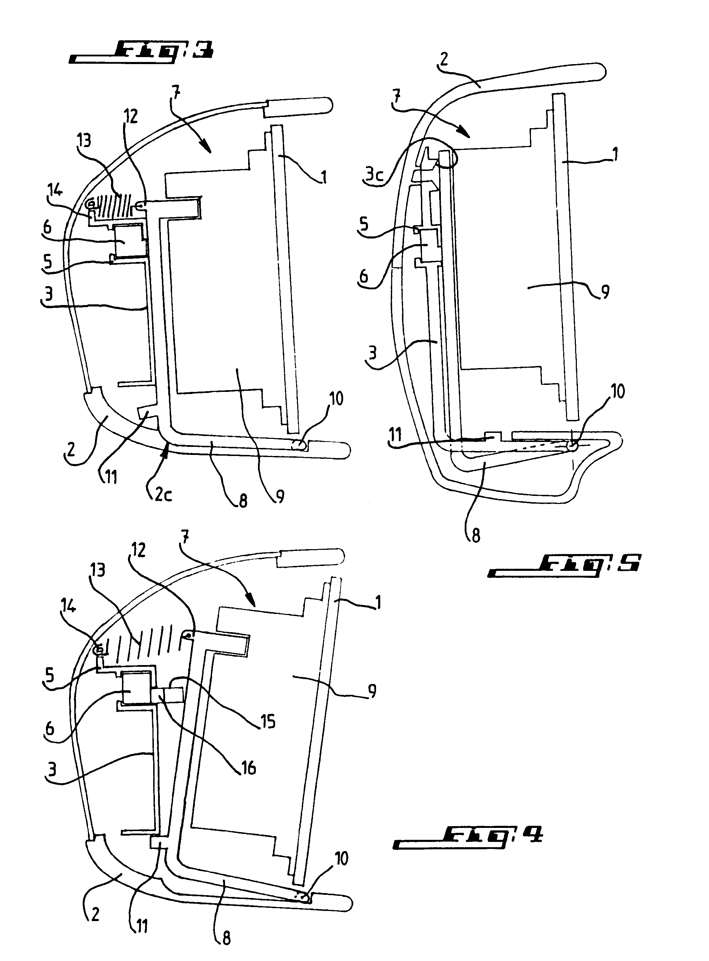

Le moyen d'entraînement 4 fixé sur la platine de support 3 comprend un doigt coulissant 4a, apte à faire saillie du moyen 4 lorsque celui-ci est alimenté en courant électrique par intermédiaire de fils de connexion repérés en F. Comme on le voit sur les figures 1 et 2, le doigt coulissant 4a et l'élément mobile 6 sont rattachés l'un à l'autre par un pivot sphérique et sont conjointement guidés à l'intérieur de la glissière 5 suivant une trajectoire rectiligne.

Au regard d'une ouverture de passage du miroir 1, formée dans le boîtier 2 à un emplacement situé en face de la portion allongée 3b précitée, est prévu un ensemble porte-miroir 7 constitué par une platine mobile 8 sur laquelle est fixé un socle 9 supportant le miroir 1.

La platine mobile 8 est en forme d'équerre et est montée pivotante autour d'un axe de rotation 10, solidaire du boîtier 2, qui s'étend à la partie inférieure du boîtier 2 de façon sensiblement parallèle à l'axe longitudinal de la glissière 5.

Comme on le voit bien sur la figure 3, la portion coudée de la platine mobile 8 est adaptée pour venir en appui contre un évidement 2c, formé dans la paroi inférieure du boîtier 2 afin de constituer une butée permettant de définir une position dite "relevée" de l'ensemble porte-miroir 7.

On précisera encore ici que, suivant le mode de réalisation illustré sur les figures 1 à 4, la platine mobile 8 comporte des protubérances formant butée 11 aptes à venir en contact avec la partie inférieure de la platine du support 3 de manière à définir avec précision la position dite "inclinée" de l'ensemble porte-miroir 7, par rapport à la platine de support 3.

La platine mobile 8 comporte également à sa partie supérieure une languette 12 de fixation d'un ressort hélicoïdal 13 dont l'extrémité opposée à la platine 8 est fixée à une languette 14, intégrale à glissière 5. On a ainsi obtenu un moyen de rappel en position relevée de l'ensemble porte-miroir 7.

En revenant maintenant à la figure 1, on remarquera que l'élément mobile 6, qui est de section générale sensiblement rectangulaire et qui est monté coulissant dans la glissière 5, comporte à sa paroi faisant face à la platine mobile 8 une rampe 15 en forme de biseau et faisant saillie de la glissière 5. La surface biseautée de cette rampe 15 s'étend suivant l'axe longitudinal de la glissière 5 de manière que la paroi de plus grande hauteur de ladite rampe soit située du côté de l'élément mobile 10 qui est le plus proche du système d'entraînement 4.

De plus, on notera que la paroi de plus grande hauteur de la rampe 15 comporte un évidement rectangulaire 16 qui coopère avec une ouverture 17 formée dans la platine mobile 8, au travers de laquelle la rampe 15 fait saillie dans la position relevée de l'ensemble porte-miroir 7, comme le voit bien sur la figure 1, de sorte qu'un rebord 18 de la platine mobile 8 soit enserré dans l'évidement 16 précité, de manière à constituer un crochet de verrouillage de l'ensemble porte-miroir 7 dans sa position relevée.

Avant de procéder à la description du fonctionnement du dispositif d'inclinaison suivant l'invention, il convient de décrire également le mode de réalisation de l'invention présenté sur la figure 5 et pour lequel les pièces similaires ou identiques à celles décrites plus haut sont désignées par les mêmes références numériques.

Ce dispositif d'inclinaison est, de façon générale, similaire à celui visible sur les figures 1 à 4 à l'exception de la forme de la platine de support 3 qui a une section transversale en L inversé, et qui est fixée au boîtier 2 au niveau l'axe de pivotement 10 de la platine mobile 8. Grâce à une telle disposition, il est possible de prévoir un ressort de rappel (non illustré) placé au niveau dudit axe de pivotement 10 afin de réduire l'encombrement du rétroviseur dans le sens de sa largeur.

On remarquera également que, d'après ce mode de réalisation, la partie inférieure de la platine mobile 8 s'étend entre les portions de fixation de la platine de support 3 au boîtier 2. Ces dispositions permettent encore de réduire l'encombrement du rétroviseur et, de plus, de disposer les butées 11 sur la platine de support 3 de façon que celles-ci s'étendent vers l'intérieur du boîtier 2. Suivant ce mode de réalisation, ce ne sont pas les portions 2c du boîtier 2, mais une portion 3c de la platine 3 qui fait office de butée afin de déterminer la position stable relevée de l'ensemble porte-miroir 7.

En revenant aux figures 1 et 2, nous allons brièvement décrire le fonctionnement du dispositif d'inclinaison réalisé suivant la présente invention.

Dans sa position dite relevée visible sur la figure 1, le doigt coulissant 4a du moyen d'entraînement 4 est rétracté à l'intérieur de ce dernier de façon que l'élément mobile 6 soit à sa position stable dite "de repos" et verrouille la platine mobile 8 en appui contre la butée 2c et contre la platine de support 3. Un courant électrique est alors fourni, par l'intermédiaire des fils de connexion F au moyen d'entraînement 4 de façon que le doigt coulissant 4a fasse saillie du moyen 4 et coulisse à l'intérieur de la glissière 5. Ce mouvement du doigt 4a a pour effet de déplacer l'élément mobile 6 en l'éloignant du moyen 4, tel qu'il est visible sur la figure 2. Lors de ce déplacement le long de la glissière 5, le crochet 16 de la rampe 15 libère la portion 18 de la platine mobile 8. Après ce déverrouillage, la rampe 15 continue son déplacement et glisse contre le rebord de l'ouverture 17 de façon à venir faire levier, en s'opposant à l'action du ressort de rappel 13, entre la platine du support 3 et la partie mobile 8, ce qui a pour effet de faire pivoter cette dernière autour de ses axes 10. Lorsque les butées 11 entrent en contact avec la platine de support 3 (figure 4), l'ensemble porte-miroir 7 a atteint sa position "inclinée" suivant laquelle le miroir 1 est orienté vers le bas du véhicule.

On comprend donc que le miroir 1 reste dans cette position inclinée tant que le moyen d'entraînement 4 est alimenté en courant électrique. Une fois qu'on a interrompu la fourniture en courant dans les fils de connexion F, le ressort 13 rappelle la platine mobile 8 qui repousse l'élément mobile 8 jusqu'à sa position de repos, c'est-à-dire correspondant à la position relevée de l'ensemble porte-miroir 7 en appui contre la butée 2c. Durant ce déplacement, l'élément mobile 6 qui revient à sa position de repos effectue le verrouillage de la platine mobile 8 à l'aide de son crochet de verrouillage référencé en 16.

Les dispositifs d'inclinaison construits suivant cette invention pourront être installés dans tout type de rétroviseur à réglage électrique, comme suivant les exemples décrits précédemment, ou encore à réglage mécanique. Dans ce dernier cas, le système de réglage de la position de conduite courante du miroir 1 pourra être disposé, par exemple, dans le socle 9 de l'ensemble porte-miroir 7.

Bien entendu, l'invention n'est nullement limitée au mode de réalisation décrit et illustré qui n'a été donné qu'à titre d'exemple.

Il va de soi que le moyen d'entraînement électrique décrit dans les exemples pourra, par exemple, être remplacé par un simple moyen mécanique. Dans le cas où l'on opterait pour un moyen d'entraînement électrique, celui-ci pourra être commandé de diverses manières telles que, par exemple à l'aide d'un interrupteur disposé sur le tableau de bord du véhicule, ou encore pourra être déclenché automatiquement par l'interrupteur d'allumage du feu de recul du véhicule.

## Revendications

1. Dispositif d'inclinaison d'un miroir de rétroviseur extérieur pour un véhicule automobile, du type comprenant un miroir (1) articulé sur une platine de support (3) solidaire d'un boîtier (2) du rétroviseur et supportant un élément mobile (6), cet élément qui est commandé par un moyen d'entraînement (4) déplaçant le miroir, entre une position relevée adaptée à la conduite courante et une position inclinée apte à accroître la visibilité vers le bas lors d'une manoeuvre en marche arrière du véhicule, caractérisé en ce que ledit élément mobile coopère avec un ensemble porte-miroir (7) pivotant, entre deux positions stables prédéterminées par des butées (2c, 3c, 11) qui correspondent respectivement à l'une desdites positions relevée ou inclinée du miroir (1), les butées étant constituées par un évidement (2c) du boîtier (2) et/ou par des protubérances (3c, 11) de la platine de support et/ou de l'ensemble porte-miroir.

2. Dispositif selon la revendication 1, caractérisé en ce que la platine de support (3) comporte une partie en forme de glissière (5) dans laquelle est monté coulissant ledit élément mobile (6), ce dernier étant fonctionnellement lié au moyen d'entraînement (4) et comportant une rampe en biseau (15) formant levier et s'étendant en saillie de ladite glissière (5), ledit levier étant apte à s'intercaler entre la platine de support (3) et l'ensemble porte-miroir (7) afin de faire pivoter ce dernier.

3. Dispositif selon la revendication 2, caractérisé en ce que la rampe en biseau (15) dudit élément mobile (6) comporte un évidement (16) apte à s'engager dans une partie (17, 18) de l'ensemble porte-miroir (7) de manière à former un crochet de verrouillage du porte-miroir dans sa position relevée.

4. Dispositif selon l'une des revendications 1 à 3, caractérisé en ce qu'un ressort (13) de rappel de l'ensemble porte-miroir (7) en position relevée, relie la platine de support (3) et ledit ensemble porte-miroir.

5. Dispositif selon l'une des revendications 1 à 4, caractérisé en ce que le moyen d'entraînement (4) précité est constitué par un moto-réducteur ou un électro-aimant fixé sur la platine de support (3).

6. Dispositif selon la revendication 5, caractérisé en ce que le moyen d'entraînement (4) est commandé par un interrupteur d'allumage du feu de recul du véhicule.

7. Dispositif selon la revendication 5, caractérisé en ce que le moyen d'entraînement (4) est commandé par un interrupteur disposé sur le tableau de bord du véhicule.

8. Rétroviseur extérieur pour véhicule automobile par exemple, caractérisé en ce qu'il est équipé d'un dispositif d'inclinaison d'un miroir (1) selon l'une des revendications précédentes.

## Patentansprüche

1. Vorrichtung zum Neigen eines Aussen- Rückblickspiegels für ein Kraftfahrzeug, der einen an einer mit einem Gehäuse (2) des Rückblickspiegels fest verbundenen und ein bewegliches Element (6) tragenden Tragplatte (3) angelenkten Spiegel (1) umfassenden Gattung, wobei dieses Element, das durch ein Antriebsmittel (4) betätigt wird, den Spiegel zwischen einer an das gewöhnliche Fahren angepassten hochgerichteten Stellung und einer zur Erweiterung der Sicht nach unten während eines Rückwärtsfahrtvorganges des Fahrzeuges geeigneten geneigten Stellung bewegt, dadurch gekennzeichnet, dass das besagte bewegliche Element mit einer Spiegel- halterungseinheit (7) zusammenwirkt, welche zwischen zwei durch Anschläge (2c,3c,11) vorbestimmten stabilen Stellungen schwenkt, die jeweils einer der besagten hochgerichteten oder geneigten Stellungen des Spiegels (1) entsprechen, wobei die Anschläge durch Aussparungen (2c) des Gehäuses (2) und/oder durch Vorsprünge (3c,11) der Tragplatte und/oder der Spiegelhalterungseinheit gebildet werden.

2. Vorrichtung nach Anspruch 1, dadurch gekennzeichnet, dass die Tragplatte (3) einen gleitschienenförmigen Teil (5), in welchem das besagte bewegbare Element (6) gleitend angeordnet ist, aufweist, wobei dieses letztere funktionsgemäss mit dem Antriebsmittel (4) verbunden ist und eine einen Hebel bildende und von der besagten Gleitschiene (5) abstehende schiefkantige Rampe (15) aufweist, wobei der besagte Hebel geeignet ist, sich zwischen der Tragplatte (3) und der Spiegelhalterungseinheit (7), um die letztere zu verschwenken, einzufügen.

3. Vorrichtung nach Anspruch 2, dadurch gekennzeichnet, dass die schiefkantige Rampe (15) des besagten bewegbaren Elementes (6) eine Aussparung (16) aufweist, die geeignet ist, in einen Teil (17,18) der Spiegelhalterungseinheit (7) derart einzugreifen, um einen Hacken zur Verriegelung des Spiegelträgers in seiner hochgerichteten Stellung zu bilden.

4. Vorrichtung nach einem der Ansprüche 1 bis 3, dadurch gekennzeichnet, dass eine Feder (13) zur Rückstellung der Spiegelhalterungseinheit (7) in die hochgerichtete Stellung, die Tragplatte (3) mit der besagten Spiegelhalterungseinheit verbindet.

5. Vorrichtung nach einem der Ansprüche 1 bis 4, dadurch gekennzeichnet, dass das vorgenannte Antriebsmittel (4) durch einen Getriebemotor oder einen an der Tragplatte (3) befestigten Elektromagneten gebildet wird.

6. Vorrichtung nach Anspruch 5, dadurch gekennzeichnet, dass das Antriebsmittel (4) durch einen Schalter zum Anmachen des Rückfahrlichtes des Fahrzeugs gesteuert wird

7. Vorrichtung nach Anspruch 5, dadurch gekennzeichnet, dass das Antriebsmittel (4) durch einen an dem Armaturenbrett des Fahrzeugs angeordneten Schalter gesteuert wird.

8. Aussen- Rückblickspiegel z.B. für ein Kraftfahrzeug, dadurch gekennzeichnet, dass er mit einer Vorrichtung zum Neigen eines Spiegels (1) gemäss einem der vorangehenden Ansprüche ausgerüstet ist.

## Claims

1. Device for tilting an external rearview mirror for an automotive vehicle, of the type comprising a mirror (1) pivoted onto a supporting plate (3) made fast to a casing (2) of the mirror and supporting a movable element (6), this element which is controlled by a drive means (4) displacing the mirror between a raised position adapted for the current driving and an inclined position adapted to increase the downward visibility during a reverse running operation of the vehicle, characterized in that the said movable element co-operates with a mirror-carrying assembly (7) pivoting between two stable positions predetermined by stops (2c, 3c, 11) which correspond to one of the said raised or inclined positions, respectively, of the mirror (1), the stops being constituted by a recess (2c) of the casing (2) and/or by protrusions (3c, 11) of the supporting plate and/or of the mirror-carrying assembly.

2. Device according to claim 1, characterized in that the supporting plate (3) comprises a slipper-guide-shaped portion (5) within which the said movable element (6) is slidably mounted, the latter being operatively connected to the drive means (4) and comprising a bevel-shaped ramp (15) forming a lever and projecting from the said slipper guide (5), the said lever being adapted to position itself between the supporting plate (3) and the mirror-carrying assembly (7) in order to cause the latter to pivot.

3. Device according to claim 2, characterized in that the bevel-shaped ramp (15) of the said movable element (6) comprises a recess (16) adapted to insert itself into one part (17, 18) of the mirror-carrying assembly (7) in a manner as to form a hook for locking the mirror-carrier in its raised position.

4. Device according to one of claims 1 to 3, characterized in that a spring (13) for returning the mirror-carrying assembly (7) to the raised position connects the supporting plate (3) and the said mirror-carrying assembly.

5. Device according to one of claims 1 to 4, characterized in that the aforesaid drive means (4) is constituted by a motor-reduction gear set or an electro-magnet fastened onto the supporting plate (3).

6. Device according to claim 5, characterized in that the drive means (4) is controlled by a switch for lighting the back-up light of the vehicle.

7. Device according to claim 5, characterized in that the drive means (4) is controlled by a switch disposed onto the dash-board of the vehicle.

8. External rearview mirror for an automotive vehicle for example, characterized in that it is fitted with a device for tilting a mirror (1) according to one of the foregoing claims.
